(19) **Europäisches Patentamt / European Patent Office / Office européen des brevets**

(11) **EP 4 428 750 A1**

(12) **EUROPEAN PATENT APPLICATION**

(43) Date of publication:
**11.09.2024 Bulletin 2024/37**

(51) International Patent Classification (IPC):
*G06K 19/07* (2006.01) *G06K 7/10* (2006.01)
*H04L 67/12* (2022.01)

(21) Application number: **24160922.1**

(22) Date of filing: **01.03.2024**

(52) Cooperative Patent Classification (CPC):
**H04W 4/80; G06K 7/10198; G06K 19/0723;
H04L 67/12; H04W 64/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023 US 202363451099 P**

(71) Applicant: **Nokia Technologies Oy
02610 Espoo (FI)**

(72) Inventors:
• **SVENDSEN, Simon
9000 Aalborg (DK)**
• **HARREBEK, Johannes
9000 Aalborg (DK)**
• **BARBU, Oana-Elena
9220 Aalborg (DK)**
• **VEJLGAARD, Benny
9260 Gistrup (DK)**

(74) Representative: **Nokia EPO representatives
Nokia Technologies Oy
Karakaari 7
02610 Espoo (FI)**

(54) **AMBIENT INTERNET OF THINGS TAG READER PROCEDURE FOR ESTIMATION OF TAG CHARGE TIME WITH PERIODIC POSITIONING ACTIVATION REFERENCE SIGNALS**

(57) Systems, methods, apparatuses, and computer program products to determine a required reconfiguration of a PARS sequence, and quickly estimate the charge time of a fully passive A-IoT tag. One method may include a UE reader determining whether a back-scatter signal for at least one known tag identifier was received for each of at least one PARS; determining whether more than one back-scatter signal for the at least one known tag identifier was received for the first of the at least one PARS; determining whether a previous increase in a total power of at least one PARS burst was performed below a granularity threshold; and calculating a current charge time of an ambient tag based upon a previous iteration.

FIG. 2

## Description

## TECHNICAL FIELD:

Some example embodiments may generally relate to mobile or wireless telecommunication systems, such as 3rd Generation Partnership Project (3GPP) Long Term Evolution (LTE), 5th generation (5G) radio access technology (RAT), new radio (NR) access technology, 6th generation (6G), and/or other communications systems. For example, certain example embodiments may relate to systems and/or methods to determine a required reconfiguration of a positioning activation reference signal (PARS) sequence, and quickly estimate the charge time of a fully passive ambient Internet of things (A-IoT) tag.

## BACKGROUND:

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

## SUMMARY:

In accordance with some example embodiments, a method may include determining, by a user equipment reader, whether a back-scatter signal for at least one known tag identifier was received for each of at least one positioning activation reference signal burst. The method may further include determining, by the user equipment reader, whether more than one back-scatter signal for the at least one known tag identifier was received for the first of the at least one positioning activation reference signal burst. The method may further include determining, by the user equipment reader, whether a first increase in a total energy of at least one positioning activation reference signal burst was performed below a granularity threshold. The method may further include calculating, by the user equipment reader, a charge time of an ambient tag based upon a first iteration.

In accordance with certain example embodiments, an apparatus may include means for determining whether a back-scatter signal for at least one known tag identifier was received for each of at least one positioning activation reference signal burst. The apparatus may further include means for determining whether more than one back-scatter signal for the at least one known tag identifier was received for the first of the at least one positioning activation reference signal burst. The apparatus may further include means for determining whether a first increase in a total energy of at least one positioning activation reference signal burst was performed below a granularity threshold. The apparatus may further include means for calculating a charge time of an ambient tag based upon a first iteration.

In accordance with various example embodiments, a non-transitory computer readable medium may include program instructions that, when executed by an apparatus, cause the apparatus to perform at least a method. The method may include determining whether a back-scatter signal for at least one known tag identifier was received for each of at least one positioning activation reference signal burst. The method may further include determining whether more than one back-scatter signal for the at least one known tag identifier was received for the first of the at least one positioning activation reference signal burst. The method may further include determining whether a first increase in a total energy of at least one positioning activation reference signal burst was performed below a granularity threshold. The method may further include calculating a charge time of an ambient tag based upon a first iteration.

In accordance with some example embodiments, a computer program product may perform a method. The method may include determining whether a back-scatter signal for at least one known tag identifier was received for each of at least one positioning activation reference signal burst. The method may further include determining whether more than one back-scatter signal for the at least one known tag identifier was received for the first of the at least one positioning activation reference signal burst. The method may further include determining whether a first increase in a total energy of at least one positioning activation reference signal burst was performed below a granularity threshold. The method may further include calculating a charge time of an ambient tag based upon a first iteration.

In accordance with certain example embodiments, an apparatus may include at least one processor and at least one memory storing instructions that, when executed by the at least one processor, cause the apparatus at least to determine whether a back-scatter signal for at least one known tag identifier was received for each of at least one positioning activation reference signal burst. The at least one memory and instructions, when executed by the at least one processor, may further cause the apparatus at least to determine whether more than one back-scatter signal for the at least one known tag identifier was received for the first of the at least one positioning activation reference signal burst. The at least one memory and instructions, when executed by the at least one processor, may further cause the apparatus at least to determine whether a first increase in a total energy of at least one positioning activation reference signal burst was performed below a granularity threshold. The at least one memory and instructions, when executed by the at least one processor, may further cause the apparatus at least to calculate a charge time of an ambient tag based upon a first iteration.

In accordance with various example embodiments, an apparatus may include determining circuitry configured to determine whether a back-scatter signal for at least one known tag identifier was received for each of at least one positioning activation reference signal burst. The apparatus may further include determining circuitry configured to determine whether more than one back-scatter signal for the at least one known tag identifier was received for the first of the at least one positioning activation reference signal burst. The apparatus may further include determining circuitry configured to determine whether a first increase in a total energy of at least one positioning activation reference signal burst was performed below a granularity threshold The apparatus may further include calculating circuitry configured to calculate a charge time of an ambient tag based upon a first iteration.

In accordance with some example embodiments, a method may include performing, by a user equipment reader, a first determination as to whether a first energy level of a positioning activation reference signal burst is above a first threshold at a passive ambient Internet of things tag to charge and back-scatter an intentional discharge response by monitoring potential back-scattered signals from the ambient Internet of things tag. The method may further include performing, by the user equipment reader, a second determination as to whether a first periodicity of a positioning activation reference signal is above a second threshold at the passive ambient Internet of things tag to charge and back-scatter the intentional discharge response. The method may further include, based on at least one of the first determination or the second determination not being fulfilled, requesting, by the user equipment reader, a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

In accordance with certain example embodiments, an apparatus may include means for performing a first determination as to whether a first energy level of a positioning activation reference signal burst is above a first threshold at a passive ambient Internet of things tag to charge and back-scatter an intentional discharge response by monitoring potential back-scattered signals from the ambient Internet of things tag. The apparatus may further include means for performing a second determination as to whether a first periodicity of a positioning activation reference signal is above a second threshold at the passive ambient Internet of things tag to charge and back-scatter the intentional discharge response. The apparatus may further include means for, based on at least one of the first determination or the second determination not being fulfilled, requesting a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

In accordance with various example embodiments, a non-transitory computer readable medium may include program instructions that, when executed by an apparatus, cause the apparatus to perform at least a method. The method may include performing a first determination as to whether a first energy level of a positioning activation reference signal burst is above a first threshold at a passive ambient Internet of things tag to charge and back-scatter an intentional discharge response by monitoring potential back-scattered signals from the ambient Internet of things tag. The method may further include performing a second determination as to whether a first periodicity of a positioning activation reference signal is above a second threshold at the passive ambient Internet of things tag to charge and back-scatter the intentional discharge response. The method may further include, based on at least one of the first determination or the second determination not being fulfilled, requesting a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

In accordance with some example embodiments, a computer program product may perform a method. The method may include performing a first determination as to whether a first energy level of a positioning activation reference signal burst is above a first threshold at a passive ambient Internet of things tag to charge and back-scatter an intentional discharge response by monitoring potential back-scattered signals from the ambient Internet of things tag. The method may further include performing a second determination as to whether a first periodicity of a positioning activation reference signal is above a second threshold at the passive ambient Internet of things tag to charge and back-scatter the intentional discharge response. The method may further include, based on at least one of the first determination or the second determination not being fulfilled, requesting a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

In accordance with certain example embodiments, an apparatus may include at least one processor and at least one memory storing instructions that, when executed by the at least one processor, cause the apparatus at least to perform a first determination as to whether a first energy level of a positioning activation reference signal burst is above a first threshold at a passive ambient Internet of things tag to charge and back-scatter an intentional discharge response by monitoring potential back-scattered signals from the ambient Internet of things tag. The at least one memory and instructions, when executed by the at least one processor, may further cause the apparatus at least to perform a second determination as to whether a first periodicity of a positioning activation reference signal is above a second threshold at the passive ambient Internet of things tag to charge and back-scatter the intentional discharge response. The at least one memory and instructions, when executed by the at least one processor, may further cause the apparatus at least to, based on at least one of the first determination or the second determination not being fulfilled, requesting a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

In accordance with various example embodiments, an apparatus may include determining circuitry configured to perform a first determination as to whether a first energy level of a positioning activation reference signal burst is above a first threshold at a passive ambient Internet of things tag to charge and back-scatter an intentional discharge response by monitoring potential back-scattered signals from the ambient Internet of things tag. The apparatus may further include determining circuitry configured to perform a second determination as to whether a first periodicity of a positioning activation reference signal is above a second threshold at the passive ambient Internet of things tag to charge and back-scatter the intentional discharge response. The apparatus may further include requesting circuitry configured to, based on at least one of the first determination or the second determination not being fulfilled, requesting a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

## BRIEF DESCRIPTION OF THE DRAWINGS:

For a proper understanding of example embodiments, reference should be made to the accompanying drawings, wherein:

FIG. 1A illustrates an example of a mono-static configuration where an activator and reader are located in the same entity;
FIG. 1B illustrates an example of a bi/multi-static configuration where an activator and one or more readers are located in separate entities;
FIG. 2 illustrates a flow chart according to some example embodiments;
FIG. 3 illustrates an example of a visualization of a fully passive A-IoT Tag illuminated with a sufficiently long periodicity of the PARS according to certain example embodiments;
FIG. 4 illustrates another example of a visualization of a fully passive A-IoT tag illuminated with insufficient periodicity of the PARS according to some example embodiments;
FIG. 5 illustrates another example of a visualization of a semi-passive A-IoT tag with predefined behavior when the activation signal is a PARS according to various example embodiments;
FIG. 6 provides a legend for the descriptions of FIGs. 3-5; and
FIG. 7 illustrates an example of various UE and network devices according to some example embodiments.

## DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for determining a required reconfiguration of a PARS sequence, and quickly estimating the charge time of a fully passive A-IoT tag is not intended to limit the scope of certain example embodiments, but is instead representative of selected example embodiments.

With respect to IoT applications, 3GPP includes narrowband (NB)-IoT/enhanced machine type communication (eMTC) and NR reduced capability (RedCap) functionalities to satisfy the requirements of low cost and low power devices for wide area IoT communication. These IoT devices may consume tens or hundreds of milliwatts power during transceiving, with minimal cost. However, to achieve the internet of everything, IoT devices with ten or even a hundred times lower cost and power consumption may be needed, especially for a large number of applications requiring battery-free devices.

The number of IoT connections has been rapidly growing in recent years, and is predicted to eventually exceed hundreds of billions. With more IoT devices expected to be interconnected to improve production efficiency and increase convenience, these IoT devices will require a further reduction of size, cost, and power consumption. In particular, regular replacement of batteries for IoT devices would be impractical due to the tremendous consumption of materials and manpower. Instead, energy may be harvested from environments to power IoT devices for self-sustainable communications, especially in applications with a high number of devices (*e.g.*, ID tags and sensors).

One critical issue with existing 3GPP technologies for some IoT applications is energy harvesting capabilities with consideration of limited device size. Cellular devices usually consume tens or even hundreds of milliwatts power for transceiver processing. For example, with a NB-IoT module, the typical current consumption for receiving signals is about 60mA with a supply voltage higher than 3.1V, and 70mA for transmitting processing at OdBm transmit power. Furthermore, the output power provided by a typical energy harvester is mostly below 1 milliwatt, partly due to the small size of a few square centimeters for most IoT devices. Thus, since the available harvestable power is far less than the consumed power, it would be impractical in most cases to power cellular devices only with energy harvesting.

One possible solution may be to integrate energy harvesting with rechargeable batteries and/or supercapacitors. However, rechargeable batteries and supercapacitors may both suffer from shortened lifetimes. In addition, it may be difficult to provide constant charging currents or voltages with energy harvesting, while longtime continuous charging may be needed due to the very small output power from energy harvesting. Inconsistent charging currents and longtime continuous charging will both contribute to decreased battery life. In addition, the lifetime of supercapacitors may be significantly reduced in high temperature environments (*e.g.*, less than 3 years at 50° C). In addition, IoT devices may be significantly smaller; specifically, since "button cell" batteries (*e.g.*, 5 to 25 mm, CR2032) may only provide a current of a few tens of milliamps, a battery with a much larger size (*e.g.*, AA battery) may be required to power cellular devices, which may be larger than the IoT device itself. To store energy for a proper duration of working (*e.g.*, one second), the required capacitance of a supercapacitor may be a hundred millifarads (mF); however, the size of such supercapacitors may also be larger than the IoT device. Thirdly, both rechargeable batteries and supercapacitors may be more expensive than the module itself. Even when purchased in large quantities, the cost of a suitable battery or supercapacitor may be relatively expensive, potentially doubling the cost of the IoT device.

Radio frequency identification (RFID) technology can support battery-free tags (devices). The power consumption of some commercial, passive RFID tags can be as low as 1 microwatt ($\mu$W). Low power consumption may be possible with envelope detection for downlink data reception and back-scatter communication for uplink data transmission. RFID primarily designed for short-range communications (*e.g.*, less than 10 meters). However, the air interface and transmission scheme of RFID may hinder improving its link budget and capabilities of supporting a scalable network.

Extremely low power consumption of back-scatter communication is used in technologies such as Wi-Fi (*i.e.*, IEEE 802.11b), Bluetooth, UWB (ultra wideband), and Long Range (LoRa) (*i.e.*, ITU-T Y.4480). A few or tens of microwatts power consumption can be supported for passive IoT tags based on, or with, small modifications to these air interfaces. For example, a LoRa tag implemented with commercial off-the-shelf components may transmit sensing data to a receiver as far as 380 meters away. However, a comprehensive system design is needed that satisfies the requirements of various IoT use cases.

3GPP IoT technology, suitable for deployment in a 3GPP system, may rely on ultra-low complexity devices with ultra-low power consumption for the very-low end IoT applications. This may address scenarios that cannot otherwise be fulfilled based on existing 3GPP low-power wide-area (LPWA) IoT technology (*e.g.*, NB-IoT including with reduced peak Tx power).

In terms of energy storage, 3GPP IoT technology may consider device characteristics, such as battery-free devices with no energy storage capabilities, and instead completely dependent on the availability of an external source of energy (*e.g.*, harvesting). In addition, 3GPP IoT technology may also consider devices with limited energy storage capabilities that do not need to be replaced or recharged manually. Device categorization based on corresponding characteristics (*e.g.*, energy source, energy storage capability, passive/active transmission, etc.) may also be considered. A 3GPP IoT device's peak power consumption may be limited by its practical form factor for particular IoT cases, as well as its energy source.

Development of 3GPP IoT technologies may also identify suitable deployment scenarios and their characteristics. In particular, 3GPP IoT technologies may also be based upon indoor/outdoor environments, base station characteristics (*e.g.*, macro/micro/pico cells-based deployments), and connectivity topologies, including which nodes (*e.g.*, base station, UE, relay, repeater, etc.) can communicate with target devices. 3GPP IoT technologies may also depend upon time-division duplex (TDD)/frequency-division duplex (FDD), frequency bands in licensed or unlicensed spectrum, any coexistence with UEs and infrastructure in frequency bands for other 3GPP technologies, and any device-originated and/or device-terminated traffic assumptions.

A set of RAN design targets may be formulated based on the identified deployment scenarios and their characteristics for the relevant use cases, including at least power consumption, complexity, coverage, data rate, and positioning accuracy.

Several use cases may require tag position estimation that rely on a return time travel (RTT) of a back-scattered signal from the passive A-IoT tag. However, different types of tags may have different response times, from when the activation/positioning signal is received, to the actual activation/modulation of the back-scattered signal. This may occur due to the required charge time for the passive A-IoT tag that determines when the passive A-IoT tag can initiate its modulation of the back-scattered signal.

The charge time of a passive A-IoT tag may depend on energy storage capabilities (e.g., fully passive (battery-free) or semi-passive (small battery or super capacitor)), energy harvesting capabilities (e.g., only RF signals or other ambient energy sources like solar, kinetic, etc.), and current conditions at the passive A-IoT tag (e.g., charge level and the energy level of the received harvesting signal, and thus power level and duration).

The charge time for each passive A-IoT tag to be positioned may be derived for the current channel conditions at the passive A-IoT tag when the position reference signal (PRS) is transmitted by an activator, in order to derive an accurate position estimate of the tag device. A charge time for an A-IoT tag of only 3ns may result in a positioning error of 1 meter; thus, this charge delay may significantly impair positioning accuracy.

Certain example embodiments described herein may have various benefits and/or advantages to overcome the disadvantages described above. For example, certain example embodiments may enable estimation of the charge time ($\tau_c$) of fully passive A-IoT tags, thereby increasing positioning accuracy for fully passive A-IoT tags. Thus, certain example embodiments discussed below are directed to improvements in computer-related technology.

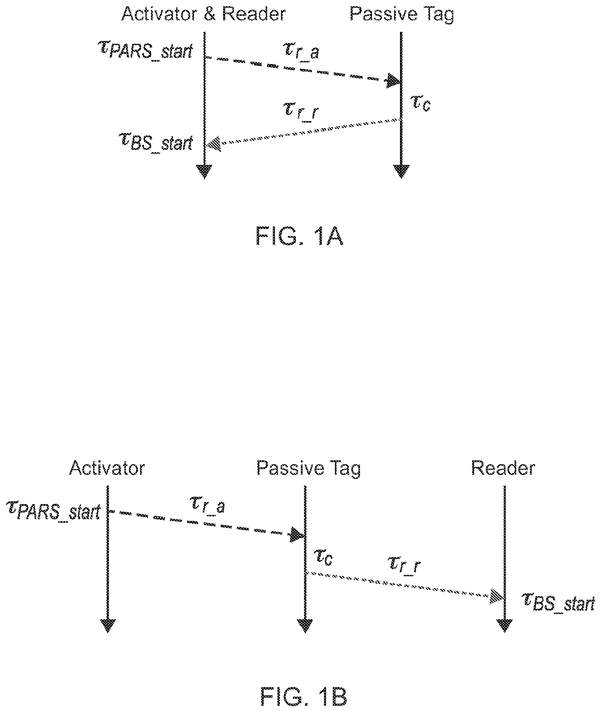

Some example embodiments described herein may include configurations that are mono-static (i.e., activator and reader are located in same entity), as shown in FIG. 1A, or bi- or multi-static (i.e., activator and readers are located in separate entities), as shown in FIG. 1B. As used in these figures, $\tau_{PARS\_start}$ may denote the start time of the activation; $\tau_{BS\_start}$ may denote the start time of the received back-scatter signal; $\tau_{r\_a}$ may denote the propagation time between the activator and the A-IoT tag; $\tau_{r\_r}$ may denote the propagation time between the reader and the A-IoT tag; and $\tau_c$ may denote the charge time at the A-IoT tag for the current channel conditions. RTT may then be estimated according to

$$RTT = \tau_{BS\_start} - \tau_{PARS\_start} - \tau_c,$$

allowing a reader in an ambient IoT network to estimate the charge time ($\tau_c$) at the A-IoT tag.

Certain example embodiments may enable determining the charge time ($\tau_c$) of an A-IoT tag by utilizing periodic PARS when deriving the RTT for individual A-IoT tags. The configuration and resource allocation of the PARS may be controlled by a session control unit (SCU) that could be a separate entity, a base station (e.g., eNB, gNB), a location management function (LMF), or a part of a A-IoT reader or activator. Two different A-IoT tag types may be used, specifically a fully passive A-IoT tag which may continue to modulate the activation signal so long as the activation signal is on, and a semi-passive IoT tag with predefined behavior.

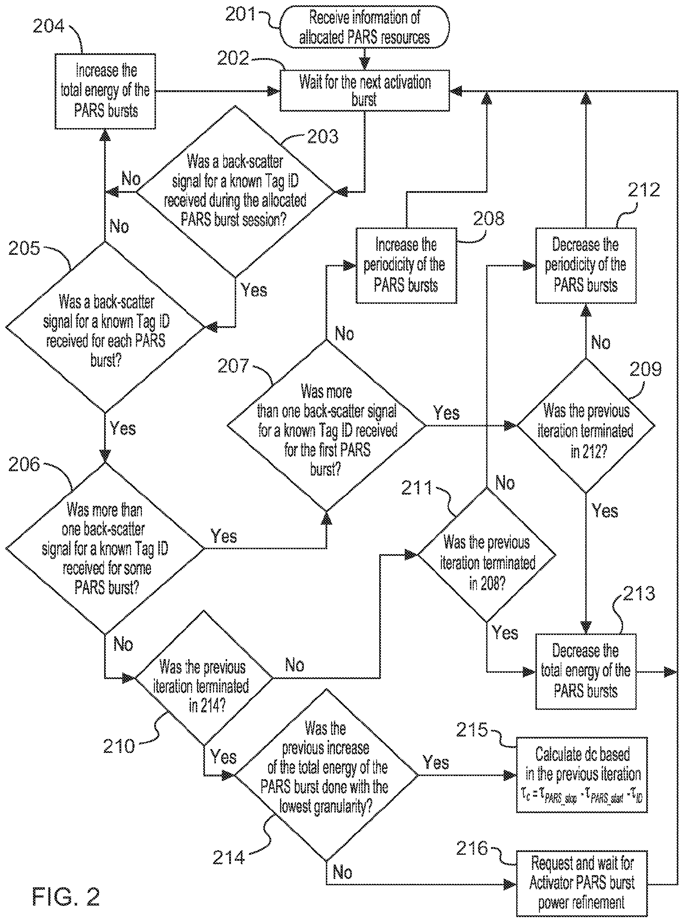

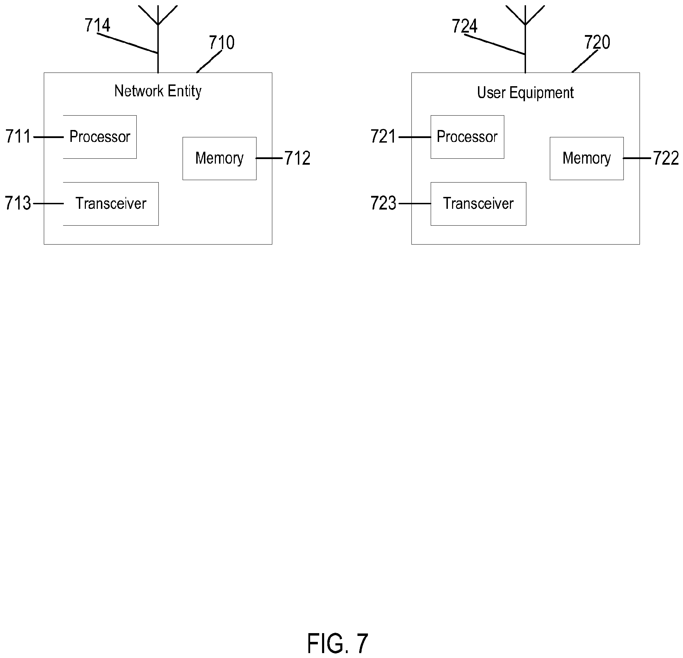

FIG. 2 illustrates an example of a flow diagram of a method that may be performed by a reader of a UE, such as UE 720 illustrated in FIG. 7, according to various example embodiments.

At step 201, the method may include receiving information indicating allocated PARS resources from an SCU.

At step 202, the method may include waiting for a next activation burst.

At step 203, the method may include listening for and determining whether a back-scatter signal for a known tag ID (e.g., A-IoT) was received during an allocated PARS burst session.

At step 205, upon determining that a back-scatter signal for a known tag ID was received during an allocated PARS burst session at step 203, the method may include determining whether a back-scatter signal for a known tag ID was received for each PARS burst. However, upon determining that a back-scatter signal for a known tag ID was not received during an allocated PARS burst session at step 203, or determining that a back-scatter signal for a known tag ID was not received for each PARS burst at step 205, the method may include, at step 204, requesting the SCU to increase a total energy of the PARS bursts.

Upon determining that a back-scatter signal for a known tag ID was received for each PARS burst at step 205, the method may include, at step 206, determining whether more than one back-scatter signal for a known tag ID was received for some of the PARS bursts.

Upon determining that more than one back-scatter signal for a known tag ID was received for some of the PARS bursts at step 206, the method may include, at step 207, determining whether more than one back-scatter signal for a known tag ID was received for the first PARS burst.

Upon determining that only one back-scatter signal for a known tag ID was received for the first PARS burst, the method may include, at step 208, requesting the SCU to increase the periodicity of the PARS bursts, and returning to step 202.

However, upon determining at step 207 that more than one back-scatter signal for a known tag ID was received for the first PARS burst, the method may include, at step 209, determining whether the previous iteration was terminated at step 212.

Upon determining at step 206 that more than one back-scatter signal for a known tag ID was not received for some PARS burst, the method may include, at step 210, determining whether the previous iteration terminated at step 204.

Upon determining at step 210 that the previous iteration was not terminated at step 204, the method may include, at step 211, determining whether the previous iteration was terminated at step 208.

Upon determining, at step 211, that the previous iteration was not terminated at step 208, or determining, at step 209, that the previous iteration was not terminated at step 212, the method may include, at step 212, decreasing the periodicity of the PARS bursts.

Upon determining at step 209 that the previous iteration was terminated at step 212, or upon determining, at step 211, that the previous iteration was terminated at step 208, the method may include, at step 213, requesting the SCU to decrease the total energy of the PARS bursts.

Upon determining at step 210 that the previous iteration was terminated at step 204, the method may include, at step 214, determining whether the previous increase of the total energy of the PARS burst was done with the highest or lowest granularity.

Upon determining that the previous increase of the total power of the PARS burst was done with the lowest granularity, the method may include, at step 215, calculating current charge time $d_c$ of the A-IoT based on the previous iteration according to:

$$\tau_c = \tau_{PARS\_stop} - \tau_{PARS\_start} - \tau_{ID}.$$

However, upon determining at step 214 that the previous increase of the total energy of the PARS burst was not done with the lowest granularity, the method may include, at step 216, requesting the SCU, and waiting, for an activator PARS burst power refinement.

In various example embodiments, the UE reader procedure of FIG. 2 may also be used when receiving back-scattered IDs from multiple A-IoT tags. The UE reader may track when individual A-IoT tags divert from the currently used path in the flow chart, and return to those states to finish the UE reader procedure for those A-IoT tags. The UE reader may also revert back multiple times to different states in the flow chart until the charge time ($\tau_c$) is estimated for all required A-IoT tags. The UE reader may decide which A-IoT tags to follow, and define the current used path in the flow chart, and thereafter revert to the stored and known states for A-IoT tags where the charge time ($\tau_c$) has not yet been estimated. This may be accomplished for requesting the SCU for specific PARS sequence reconfigurations. It is assumed that the SCU has informed the reader of the A-IoT tag IDs that are requested for a location update.

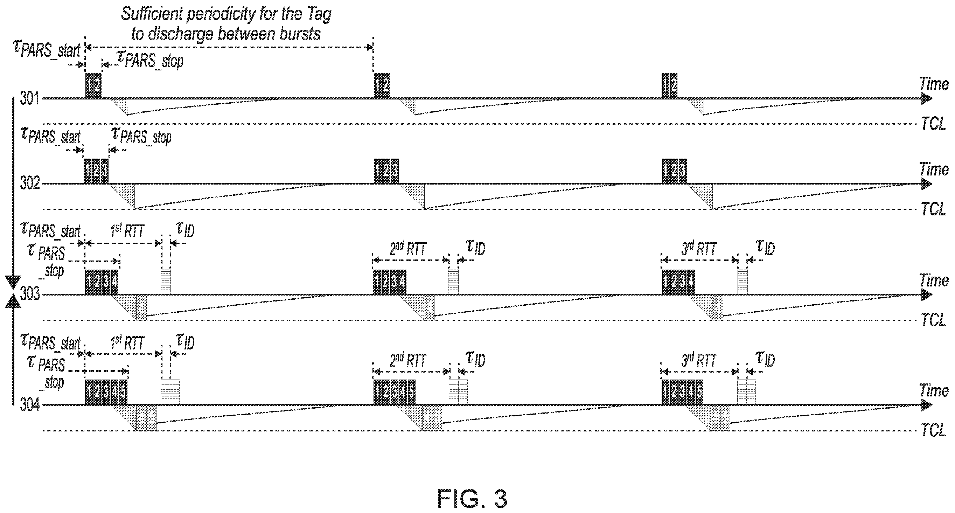

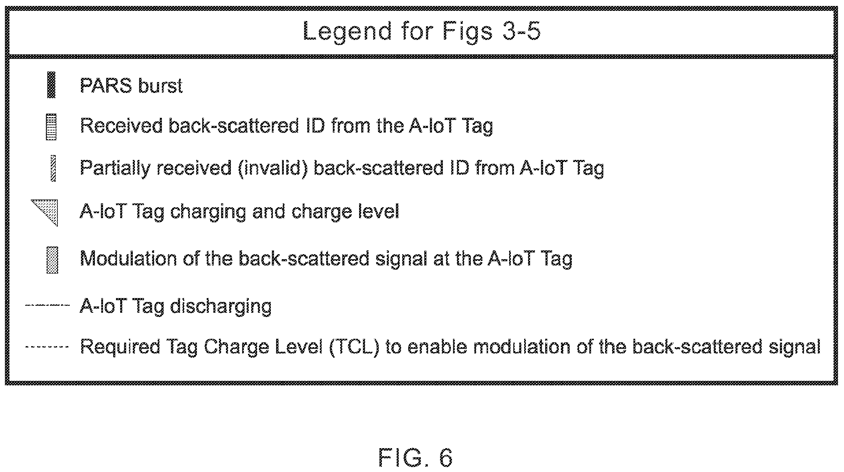

Certain example embodiments may relate to a fully passive A-IoT tag illuminated with a sufficiently long periodicity of the PARS, for the passive A-IoT tag to fully discharge between the PARS bursts. An A-IoT tag reader may rely on back-scatter signals received from the A-IoT tag. FIG. 3 depicts the steps of such embodiments, with a legend provided in FIG. 6 for PARS burst, received back-scattered ID from the A-IoT tag, A-IoT tag charging and charge level, modulation of the back-scattered signal at the A-IoT tag, A-IoT tag discharging, and required tag charge level (TCL) to enable modulation of the back-scattered signal.

At step 301, an initial configured power level and periodicity of the PARS may be insufficient for a passive A-IoT tag to charge and back-scatter an ID response. Since the reader is not receiving the ID from a known tag, the A-IoT tag may request the SCU to increase the total energy of the PARS burst. The SCU may choose to increase the burst duration, or allow the activator to increase its power level instead and keep the PARS burst duration. Both options may result in the same desired change in the back-scattered A-IoT IDs, assuming that all of the A-IoT tags are within range. FIG. 3 shows that the duration of PARS bursts is increased by x number of PARS bursts, indicated with 1, 2, 3, etc. The duration of the PARS may increased from 2 time intervals at Step 1 to 3 time intervals in Step 2. The duration of each time interval may be the highest possible granularity or a default multiplication of that value, which may also depend on the UL resource allocation from the gNB. In addition, the propagation time between the activator and A-IoT Tag ($\tau_{r\_a}$), and the reader and A-IoT Tag ($\tau_{r\_r}$) may be the duration of three time intervals, and the A-IoT ID back-scatter time ($\tau_{ID}$) may be one time interval.

At step 302, with the reader still not receiving the ID from the tag, the reader may inform the activator to increase the total energy of the PARS burst.

At step 303, the reader may receive one back-scattered ID from a known tag per transmitted PARS burst, and may now measure an RTT for each PARS burst. The reader may determine whether each of the measured RTTs are within a threshold. If the measured RTT values are within a threshold, the reader may conclude that the A-IoT tag charge time $\tau_c$ has converged, and derive a first estimate of $\tau_c$ using the following equation:

$$\tau_c \approx \tau_{PARS\_start} - \tau_{PARS\_stop} - \tau_{ID},$$

wherein $_{PARS\_start}$ may denote a start time of the PARS burst, $_{PARS\_stop}$ may denote a stop time of the PARS burst, and $\tau_{ID}$ may denote a duration of the A-IoT tag ID modulation.

The derived $\tau_c$ may not be the correct value, depending on the increase in burst duration from Step 302 to 303. If the increase in duration was performed with the highest granularity, then the derived value of the A-IoT Tag charge time $\tau_c$ may be the best value that can be obtained for the current channel conditions. However, if that is not the case, a refinement may be performed to find the transition from Step 302 to 303, and therefore the best estimate of $\tau_c$.

At step 304, the initial burst duration may be longer than required, whereby the reader may receive more than one modulated A-IoT tag ID per PARS burst, and can thereby inform the activator to reduce the PARS burst duration.

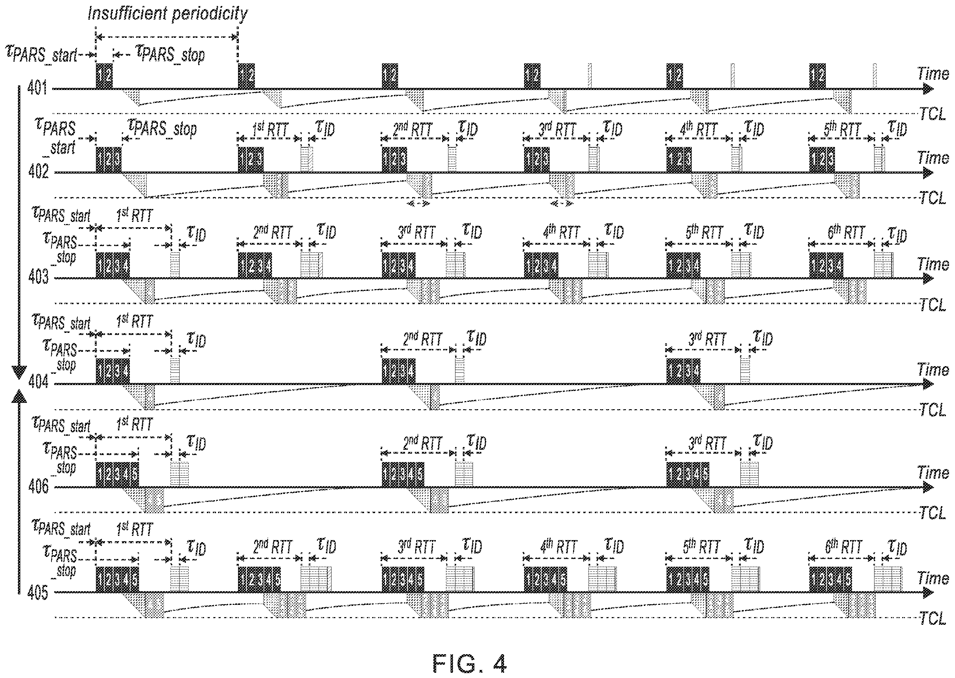

Similar to the embodiments shown in FIG. 3, some example embodiments may instead relate to a fully passive A-IoT Tag using an insufficient periodicity of the PARS. Specifically, a reader may rely on back-scatter signals received from the A-IoT tag, as shown in FIG. 4 (with a legend provided in FIG. 6), which also depicts a partially (*i.e.*, invalid) back-scattered ID received from the A-IoT tag.

At step 401, an initial configured duration and periodicity of the PARS is insufficient for the passive A-IoT to charge and back-scatter an ID response. As the reader is not receiving an ID from a known tag, it may inform the SCU to increase the total energy of the PARS burst. The periodicity of the PARS may be insufficient for the A-IoT tag to fully discharge, so a known tag ID may be received at some point in time depending on the number of transmitted PARS bursts. However, that will not change the conclusion derived by the reader.

At step 402, the reader may receive a known ID from the tag for each PARS burst, except the first PARS burst. The reader may now conclude that the burst duration of the PARS is too short for the A-IoT tag to fully charge and back-scatter on a single burst, and may inform the SCU to increase the total energy of the PARS burst (*i.e.,* PARS duration).

At step 403, the reader may receive a known ID from the tag for the first PARS burst, as well as more than one A-IoT tag ID for the remaining PARS bursts. The reader may conclude that the burst periodicity of the PARS is too short for the A-IoT tag to fully discharge between the PARS bursts, and may inform the SCU to increase the PARS periodicity.

At step 404, the reader may only receive one back-scattered ID from a known tag for each PARS burst, and may measure a RTT for each PARS burst. The reader may determine if each of the measured RTTs are within a threshold. If the measured RTT values are within a threshold, the reader may conclude that the A-IoT Tag charge time $\tau_c$ has converged, and a first estimate of $\tau_c$ can be derived by using the following equation:

$$\tau_c \approx \tau_{PARS\_start} - \tau_{PARS\_stop} - \tau_{ID},$$

where $_{PARS\_start}$ may denote start time of the PARS burst,

$_{PARS\_stop}$ may denote a stop time of the PARS burst, and $\tau_{ID}$ may denote a duration of the A-IoT Tag ID modulation.

However, the derived $\tau_c$ may be an incorrect value depending on the increase in burst duration from Step 402 to Step 403. If the increase in duration was performed with the shortest granularity, then the derived value of the A-IoT Tag charge time $\tau_c$ may be the best value that can be obtained for the current channel conditions. However, if that is not the case, then a refinement must be performed to find the transition described above with respect to FIG. 3 from Step 302 to Step 303, and therefore the best estimate of $\tau_c$ (*e.g.,* transition in FIG. 3).

At step 405, the initial burst duration may be longer than required. Specifically, the reader may receive more than one modulated A-IoT tag ID for all PARS burst, and may therefore inform the SCU to increase the PARS periodicity.

At step 406, more than one modulated A-IoT tag ID may be received for all PARS bursts, and the reader may then inform the SCU to decrease the total energy of the PARS burst.

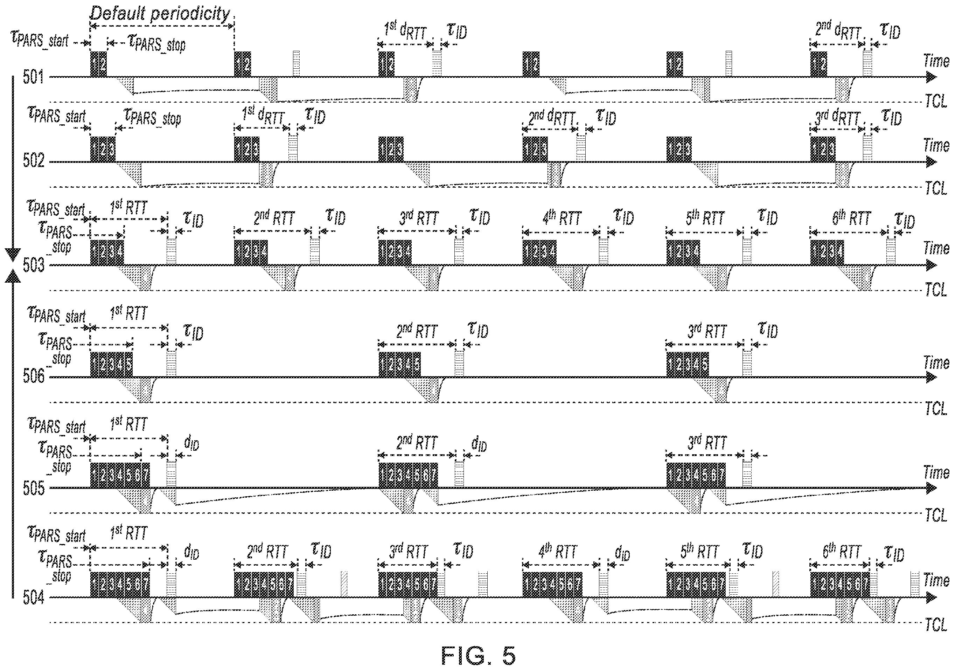

Various example embodiments may relate to a semi-passive A-IoT tag with predefined behavior when the activation signal is a PARS, as shown in FIG. 5 (with a legend provided in FIG. 6). Such a semi-passive A-IoT may only respond with a single modulated back-scatter signal, which could be its ID, and thereafter purposely discharge as fast as possible.

At step 501, the initial configured duration and periodicity of the PARS may be insufficient for the semi-passive A-IoT to maintain its charge above the TCL and back-scatter an ID response for every PARS burst. Since the reader is not receiving the ID from the tag for all bursts, the reader may inform the SCU to increase the total energy of the PARS burst (*i.e.,* PARS duration).

At step 502, the reader may still not receive the back-scattered ID from the tag for all PARS bursts, and may inform the SCU to increase the total energy of the PARS burst.

At step 503, the reader may only receive one back-scattered ID from a known tag for each PARS burst, and may now measure a RTT for each PARS burst. The reader may determine if each of the measured RTTs are within a threshold. If the measured RTT values are within a threshold, the reader may conclude that the A-IoT Tag charge time $\tau_c$ has converged, and a first estimate of $\tau_c$ may be derived by the following equation:

$$\tau_c \approx \tau_{PARS\_start} - \tau_{PARS\_stop} - \tau_{ID},$$

where $\tau_{PARS\_start}$ may denote a start time of the PARS burst, $\tau_{PARS\_stop}$ may denote a stop time of the PARS burst, and $\tau_{ID}$ may denote a duration of the A-IoT tag ID modulation.

However, the derived $\tau_c$ may not be the correct value, depending on the increase in burst duration from Step 502 to Step 503. If the increase in duration was performed with the shortest granularity, then the derived value of the A-IoT Tag charge time $\tau_c$ may be the best value that can be obtained for the current channel conditions. However, if that is not the case, then a refinement may be performed, to find the transition described in FIG. 3 in Steps 302 and 303, and thereby the best estimate of $\tau_c$ (*e.g.,* transition in FIG. 3).

At step 504, the initial burst duration may be longer than required, whereby the reader may receive more than one back-scattered A-IoT tag ID for all PARS burst. However, even if it only receives one back-scattered A-IoT Tag ID for all PARS burst, the measured RTTs may have a large variation and not be within the specified threshold. The reader can thereby inform the activator the increase the PARS periodicity.

At step 505, the measured RTTs may have a reduced variation over time and could be within the specified threshold. However, the reader may determine the transition between step 502 and 503 in order to calculate the correct $\tau_c$. The reader may inform the activator to decrease the total energy of the PARS duration.

At step 506, the transition from Step 502 to Step 503 may be performed with increased PARS periodicity, compared to Steps 2 and 3 in FIG. 5.

FIG. 7 illustrates an example of a system according to certain example embodiments. In one example embodiment, a system may include multiple devices, such as, for example, NE 710 and/or UE 720.

NE 710 may be one or more of a base station (*e.g.*, 3G UMTS NodeB, 4G LTE Evolved NodeB, or 5G NR Next Generation NodeB), a serving gateway, a server, and/or any other access node or combination thereof.

NE 710 may further include at least one gNB-centralized unit (CU), which may be associated with at least one gNB-distributed unit (DU). The at least one gNB-CU and the at least one gNB-DU may be in communication via at least one F1 interface, at least one $X_n$-C interface, and/or at least one NG interface via a 5th generation core (5GC).

UE 720 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 710 and/or UE 720 may be one or more of a citizens broadband radio service device (CBSD).

NE 710 and/or UE 720 may include at least one processor, respectively indicated as 711 and 721. Processors 711 and 721 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 712 and 722. The memory may be fixed or removable. The memory may include program instructions such as for example computer code contained therein. Memories 712 and 722 may independently be any suitable storage device, such as a non-transitory computer-readable medium. The term "non-transitory," as used herein, may correspond to a limitation of the medium itself (*i.e.*, tangible, not a signal) as opposed to a limitation on data storage persistency (*e.g.*, random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the program instructions stored in the memory, and which may be processed by the processors, may be any suitable form of computer program code, for example, a compiled or interpreted computer program written in any suitable programming language.

Processors 711 and 721, memories 712 and 722, and any subset thereof, may be configured to provide means corresponding to the various blocks of FIGs. 2-6. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 7, transceivers 713 and 723 may be provided, and one or more devices may also include at least one antenna, respectively illustrated as 714 and 724. The device may have many antennas, such as an array of antennas configured for multiple input multiple output (MIMO) communications, or multiple antennas for multiple RATs. Other configurations of these devices, for example, may be provided. Transceivers 713 and 723 may be a transmitter, a receiver, both a transmitter and a receiver, or a unit or device that may be configured both for transmission and reception.

The memory and the program instructions may be configured, with the processor for the particular device, to cause a hardware apparatus, such as UE, to perform any of the processes described above (*i.e.*, FIGs. 2-6). Therefore, in certain example embodiments, a non-transitory computer-readable medium may be encoded with computer instructions that, when executed in hardware, perform a process such as any one, some or all of the processes described herein. Alternatively, certain example embodiments may be performed entirely in hardware.

In certain example embodiments, an apparatus may include circuitry configured to perform any of the processes or functions illustrated in FIGs. 2-6. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g.*, firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

A 5G network and system architecture may be included in certain example embodiments. For example, multiple network functions may be implemented as software operating as part of a network device or dedicated hardware, as a network device itself or dedicated hardware, or as a virtual function operating as a network device or dedicated hardware. A user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. An application function (AF) may primarily interface with the core network to facilitate application usage of traffic routing and interact with the policy framework.

According to certain example embodiments, processors 711 and 721, and memories 712 and 722, may be included in or may form a part of processing circuitry or control circuitry. In addition, in some example embodiments, transceivers 713 and 723 may be included in or may form a part of transceiving circuitry.

In various example embodiments, apparatus 720 may be controlled by memory 722 and processor 721 to determine whether a back-scatter signal for at least one known tag identifier was received for each of at least one positioning activation reference signal burst; determine whether more than one back-scatter signal for the at least one known tag identifier was received for the first of the at least one positioning activation reference signal burst; determine whether a first increase in a total energy of at least one positioning activation reference signal burst was performed below a granularity threshold; and calculate a charge time of an ambient tag based upon a first iteration.

Certain example embodiments may be directed to an apparatus that includes means for performing any of the methods described herein including, for example, means for determining whether a back-scatter signal for at least one known tag identifier was received for each of at least one positioning activation reference signal burst; means for determining whether more than one back-scatter signal for the at least one known tag identifier was received for the first of the at least one positioning activation reference signal burst; means for determining whether a first increase in a total energy of at least one positioning activation reference signal burst was performed below a granularity threshold; and means for calculating a charge time of an ambient tag based upon a first iteration.

In various example embodiments, apparatus 710 may be controlled by memory 712 and processor 711 to perform a first determination as to whether a first energy level of a positioning activation reference signal burst is above a first threshold at a passive ambient Internet of things tag to charge and back-scatter an intentional discharge response by monitoring potential back-scattered signals from the ambient Internet of things tag; perform a second determination as to whether a first periodicity of a positioning activation reference signal is above a second threshold at the passive ambient Internet of things tag to charge and back-scatter the intentional discharge response; and, based on at least one of the first determination or the second determination not being fulfilled, request a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

Certain example embodiments may be directed to an apparatus that includes means for performing any of the methods described herein including, for example, means for performing a first determination as to whether a first energy level of a positioning activation reference signal burst is above a first threshold at a passive ambient Internet of things tag to charge and back-scatter an intentional discharge response by monitoring potential back-scattered signals from the ambient Internet of things tag; means for performing a second determination as to whether a first periodicity of a positioning activation reference signal is above a second threshold at the passive ambient Internet of things tag to charge and back-scatter the intentional discharge response; and, based on at least one of the first determination or the second determination not being fulfilled, means for requesting a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

Partial Glossary

| | |
|---|---|
| 3GPP | 3$^{rd}$ Generation Partnership Project |
| 5G | 5$^{th}$ Generation |
| 5GC | 5$^{th}$ Generation Core |
| 6G | 6$^{th}$ Generation |
| AF | Application Function |
| A-IoT | Ambient Internet of Things |
| ASIC | Application Specific Integrated Circuit |
| CBSD | Citizens Broadband Radio Service Device |
| CN | Core Network |
| CPU | Central Processing Unit |
| CU | Centralized Unit |
| dBm | Decibel-milliwatts |
| DU | Distributed Unit |
| eMBB | Enhanced Mobile Broadband |
| eMTC | Enhanced Machine Type Communication |
| eNB | Evolved Node B |
| FDD | Frequency Division Duplex |
| FWA | Fixed Wireless Access |
| gNB | Next Generation Node B |
| GPS | Global Positioning System |
| HDD | Hard Disk Drive |
| ID | Intentional Discharge |
| IoT | Internet of Things |
| LMF | Location Management Function |
| LORA | Long Range Radio |
| LPWA | Low-Power Wide-Area |
| LTE | Long-Term Evolution |
| LTE-A | Long-Term Evolution Advanced |
| LWF | Location Management Function |
| mA | Milliampere |
| MEMS | Micro Electrical Mechanical System |
| MIMO | Multiple Input Multiple Output |
| mMTC | Massive Machine Type Communication |
| NB-IoT | Narrowband Internet of Things |
| NE | Network Entity |
| NG | Next Generation |
| NG-eNB | Next Generation Evolved Node B |
| NG-RAN | Next Generation Radio Access Network |
| NR | New Radio |
| NW | Network |
| PARS | Positioning Activation Reference Signal |
| PDA | Personal Digital Assistance |
| PRB | Physical Resource Block |
| PRS | Position Reference Signal |
| QoS | Quality of Service |
| RAM | Random Access Memory |
| RAN | Radio Access Network |
| RAT | Radio Access Technology |
| RedCap | Reduced Capability |
| RF | Radio Frequency |
| RFID | Radio Frequency Identification |
| RFH | Radio Frequency Harvesting |
| ROM | Read-Only Memory |
| RTT | Return Time Trip |
| SCU | Session Control Unit |
| SL | Sidelink |
| SRS | Sounding Reference Signal |
| TCL | Tag Charge Level |
| TDD | Time Division Duplex |
| Tx | Transmission |
| UE | User Equipment |
| UMB | Ultra Mobile Broadband |
| UMTS | Universal Mobile Telecommunications System |
| UPF | User Plane Function |
| URLLC | Ultra-Reliable and Low-Latency Communication |

WLAN        Wireless Local Area Network

**Claims**

1. An apparatus comprising:

   means for determining whether a back-scatter signal for at least one known tag identifier was received for each of at least one positioning activation reference signal burst;
   means for determining whether more than one back-scatter signal for the at least one known tag identifier was received for the first of the at least one positioning activation reference signal burst;
   means for determining whether a first increase in a total energy of at least one positioning activation reference signal burst was performed below a granularity threshold; and
   means for calculating a charge time of an ambient tag based upon a first iteration.

2. The apparatus of claim 1, further comprising:
   means for transmitting a request to a session control unit to increase a total energy of the at least one positioning activation reference signal burst.

3. The apparatus of claim 1 or 2, further comprising:
   means for transmitting a request to a session control unit to decrease a total energy of the at least one positioning activation reference signal burst.

4. The apparatus of any of claims 1-3, further comprising:
   means for transmitting a request to a session control unit to decrease a periodicity of the at least one positioning activation reference signal burst.

5. The apparatus of any of claims 1-4, further comprising:
   means for transmitting a request to a session control unit to increase a periodicity of the at least one positioning activation reference signal burst.

6. The apparatus of any of claims 1-5, further comprising:
   means for transmitting a request to a session control unit for positioning activation reference signal burst refinement.

7. An apparatus comprising:

   means for performing a first determination as to whether a first energy level of a positioning activation reference signal burst is above a first threshold at a passive ambient Internet of things tag to charge and back-scatter an intentional discharge response by monitoring back-scattered signals from the ambient Internet of things tag;
   means for performing a second determination as to whether a first periodicity of a positioning activation reference signal is above a second threshold at the passive ambient Internet of things tag to charge and back-scatter the intentional discharge response; and
   means for, based on at least one of the first determination or the second determination not being fulfilled, requesting a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

8. The apparatus of claim 7, further comprising:
   means for repeating performing the first determination, performing the second determination, and the requesting until at least one back-scattered intentional discharge from a known tag is generated.

9. A method comprising:

   determining, by a user equipment reader, whether a back-scatter signal for at least one known tag identifier was received for each of at least one positioning activation reference signal burst;
   determining, by the user equipment reader, whether more than one back-scatter signal for the at least one known tag identifier was received for the first of the at least one positioning activation reference signal burst;
   determining, by the user equipment reader, whether a first increase in a total energy of at least one positioning activation reference signal burst was performed below a granularity threshold; and
   calculating, by the user equipment reader, a charge time of an ambient tag based upon a first iteration.

10. The method of claim 9, further comprising:
    transmitting, by the user equipment reader, a request to a session control unit to increase a total energy of the at least one positioning activation reference signal burst.

11. The method of claim 9 or 10, further comprising:
    transmitting, by the user equipment reader, a request to a session control unit to decrease a total energy of the at least one positioning activation reference signal burst.

**12.** The method of any of claims 9-11, further comprising:
transmitting, by the user equipment reader, a request to a session control unit to decrease a periodicity of the at least one positioning activation reference signal burst.

**13.** The method of any of claims 9-12, further comprising:
transmitting, by the user equipment reader, a request to a session control unit to increase a periodicity of the at least one positioning activation reference signal burst.

**14.** The method of any of claims 9-13, further comprising:
transmitting, by the user equipment reader, a request to a session control unit for positioning activation reference signal burst refinement.

**15.** A method comprising:

performing, by a user equipment reader, a first determination as to whether a first energy level of a positioning activation reference signal burst is above a first threshold at a passive ambient Internet of things tag to charge and back-scatter an intentional discharge response by monitoring back-scattered signals from the ambient Internet of things tag;
performing, by the user equipment reader, a second determination as to whether a first periodicity of a positioning activation reference signal is above a second threshold at the passive ambient Internet of things tag to charge and back-scatter the intentional discharge response; and
based on at least one of the first determination or the second determination not being fulfilled, requesting, by the user equipment reader, a session control unit to at least one of: increase a total energy of the positioning activation reference signal burst, decrease the total energy of the positioning activation reference signal burst, increase a periodicity of the positioning activation reference signal burst, or decrease the periodicity of the positioning activation reference signal burst.

**16.** The method of claim 15, further comprising:
repeating, by the user equipment reader, performing the first determination, performing the second determination, and the requesting until at least one back-scattered intentional discharge from a known tag is generated.

Activator & Reader          Passive Tag

$\tau_{PARS\_start}$                    $\tau_{r\_a}$

                                                    $\tau_c$

$\tau_{BS\_start}$                    $\tau_{r\_r}$

FIG. 1A

Activator                  Passive Tag                  Reader

$\tau_{PARS\_start}$              $\tau_{r\_a}$

                                            $\tau_c$              $\tau_{r\_r}$

                                                                            $\tau_{BS\_start}$

FIG. 1B

FIG. 2

FIG. 3

FIG. 4

FIG. 5

EP 4 428 750 A1

## Legend for Figs 3-5

▌ PARS burst

▥ Received back-scattered ID from the A-IoT Tag

▐ Partially received (invalid) back-scattered ID from A-IoT Tag

◣ A-IoT Tag charging and charge level

▥ Modulation of the back-scattered signal at the A-IoT Tag

— — — A-IoT Tag discharging

········ Required Tag Charge Level (TCL) to enable modulation of the back-scattered signal

FIG. 6

714

710

## Network Entity

711 — Processor

Memory — 712

713 — Transceiver

724

720

## User Equipment

721 — Processor

Memory — 722

723 — Transceiver

FIG. 7

Europäisches
Patentamt

European
Patent Office

Office européen
des brevets

# EUROPEAN SEARCH REPORT

**Application Number**

EP 24 16 0922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/188920 A1 (KELLY STEPHEN J [US] ET AL) 30 June 2016 (2016-06-30) * paragraphs [0008], [0030], [0035]; figures 1, 2 * | 1-16 | INV. G06K19/07 G06K7/10 ADD. H04L67/12 |
| | ----- | | |
| A | US 2020/235775 A1 (FROITZHEIM HERBERT [DE]) 23 July 2020 (2020-07-23) * paragraphs [0016], [0026], [0029]; figure 5 * | 1-16 | |
| | ----- | | |
| A | US 8 115 632 B1 (RAHIMI KAMBIZ [US] ET AL) 14 February 2012 (2012-02-14) * column 1, line 38 - line 43 * * column 1, line 63 - line 67 * * column 11, line 9 - line 30; claim 1; figure 8 * | 1-16 | |
| | ----- | | |

**TECHNICAL FIELDS SEARCHED (IPC)**

G06K
H04L
H04W

The present search report has been drawn up for all claims

| Place of search | Date of completion of the search | Examiner |
|---|---|---|
| The Hague | 19 July 2024 | Palencia Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0922

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | | Publication date | Patent family member(s) | | Publication date |
|---|---|---|---|---|---|
| US 2016188920 | A1 | 30-06-2016 | GB | 2534468 A | 27-07-2016 |
| | | | US | 2016188920 A1 | 30-06-2016 |
| US 2020235775 | A1 | 23-07-2020 | CN | 107924592 A | 17-04-2018 |
| | | | DE | 102015216220 A1 | 02-03-2017 |
| | | | US | 2020235775 A1 | 23-07-2020 |
| | | | WO | 2017032539 A1 | 02-03-2017 |
| US 8115632 | B1 | 14-02-2012 | US | 8115632 B1 | 14-02-2012 |
| | | | US | 8451119 B1 | 28-05-2013 |

For more details about this annex : see Official Journal of the European Patent Office, No. 12/82

EPO FORM P0459